# EUROPEAN PATENT SPECIFICATION

(11) **EP 1 739 992 B1**
(45) Date of publication and mention of the grant of the patent: **10.02.2010**
(21) Application number: 05254156.2
(22) Date of filing: 01.07.2005
(51) Int. Cl.: H04W 48/16

(54) **System and method for managing network lists in a wireless user equipment device**
System und Methode zum Handhaben von Netzwerklisten in einem drahtlosen Benutzerendgerät
Système et procédé d'administration des listes de réseaux dans un équipement d'utilisateur sans fil

(43) Date of publication of application: 03.01.2007
(73) Proprietor: Research In Motion Limited, Waterloo, Ontario N2L 3W8 (CA)
(72) Inventor: Buckley, Adrian of, CA 95376 (US)
(74) Representative: Hibbert, Juliet Jane Grace

(56) References cited:
- WO-A-01/62034
- US-A1- 2004 192 304

## Description

### REFERENCE TO RELATED APPLICATION(S)

This application discloses subject matter related to the subject matter disclosed in the following commonly owned co-pending U.S. patent application(s): (i) "SYSTEM AND METHOD FOR PROVIDING NETWORK ADVERTISEMENT INFORMATION VIA A NETWORK ADVERTISEMENT BROKER (NAB)," filed April 28, 2005; Application No. 11/116,470, in the name(s) of: Adrian Buckley, Paul Carpenter, Nicholas P. Alfano, and Andrew Allen (Attorney Docket No. 1400-1036US); (ii) "NETWORK SELECTION SCHEME USING A ROAMING BROKER (RB)," filed April 28, 2005; Application No. 11/116,461, in the name(s) of: Adrian Buckley, Paul Carpenter, Nicholas P. Alfano, and Andrew Allen (Attorney Docket No. 1400-1037US).

### FIELD OF THE DISCLOSURE

The present patent disclosure generally relates to communication networks. More particularly, and not by way of any limitation, the present patent application is directed to a system and method for managing network lists in a wireless user equipment (UE) device.

### BACKGROUND

It is well known in the wireless communications art to use a removable module in conjunction with a wireless mobile equipment (ME) device. Such removable modules are typically provisioned with a number of network lists that could be downloaded to the ME device when needed. Currently, different ME devices support different list sizes, thereby leading to various problems for operators that are responsible for populating the contents of the network lists on the removable modules. In particular, such disparity between what the individual ME devices can support and the list sizes of a fully-provisioned module can lead to issues when trying to guide the behavior of the ME device in selecting a particular network for service.
WO0162034 describes a scanning method for a mobile terminal in a mobile communication network that uses the current location of the mobile terminal to select frequency bands to be scanned. The mobile terminal includes an enriched database containing area definitions and service provider information corresponding to each area definition. When the scanning procedure is initiated, the mobile terminal compares its current location to the area definitions in the database to determine the frequency bands to be scanned. Thus, the mobile terminal scans first those frequency bands in which a preferred service provider is expected.

### SUMMARY

In one embodiment, the present disclosure is directed to a method for managing network lists in a wireless device, comprising one or more of the following operations: determining geographic region information based on identity information of at least one network discovered by the wireless device via scanning; and depending on geographic region information that is determined from the at least one network's identity information, downloading those network list data entries that are relevant to the geographic region information from an RSM operable to be coupled to the wireless device, the network list data entries for facilitating network selection by the wireless device.

In another embodiment, the present disclosure is directed to a system for managing network lists in a wireless device, comprising one or more of the following elements: means for determining geographic region information based on identity information of at least one network discovered by the wireless device via scanning; and means tor downloading those network list data entries that are relevant to the geographic region information from an RSM operable to be coupled to the wireless device, the network list data entries for facilitating network selection by the wireless device.

In a still further embodiment, the present disclosure is directed to a wireless device operable to customize downloading of network list information from an RSM card, comprising one or more of the following elements: a logic structure operable to effectuate discovery of at least one network via scanning; a logic structure for determining geographic region information based on the at least one network's identity information; and a logic structure for filtering only those network list data entries relevant to the geographic region information from the RSM, the network list data entries for facilitating network selection by the wireless device.

In yet another embodiment, the present disclosure is directed to a method for managing network lists in a wireless device, comprising one or more following operations: defining or provisioning a plurality of network lists on an RSM operable to be coupled to the wireless device; provisioning a list management application on the RSM; and upon providing the RSM with geographic region information associated with the wireless, modifying the plurality of network lists on the RSM by the list management application depending upon the geographic region information. In a related embodiment, the present disclosure is directed to an RSM operable to be coupled to a wireless device, comprising: at least a database structure having a plurality of network lists operable to be downloaded to a wireless device; and a list management application operable for modifying the plurality of network lists responsive to providing the RSM with geographic region information associated with the wireless device.

### BRIEF DESCRIPTION OF THE DRAWINGS

A more complete understanding of the embodiments of the present patent disclosure may be had by reference to the following Detailed Description when taken in conjunction with the accompanying drawings wherein:

FIG. 1 depicts a generalized network environment wherein an embodiment of the present patent disclosure may be practiced;

FIG. 2 depicts an exemplary embodiment of a network environment where a wireless user equipment (UE) device is operably disposed for downloading network list information in accordance with the teachings of the present patent disclosure;

FIGS. 3-6 depict various exemplary database structures provided as part of a removable storage module (RSM) from which network list information may be selectively downloaded to a UE device in accordance with the teachings of the present patent disclosure;

FIG. 7 depicts an exemplary database structure that may be utilized by a UE device for customizing the downloading of network list information from an RSM;

FIG. 8 is a flowchart associated with an embodiment of the present patent disclosure;

FIG. 9 is a flowchart associated with another embodiment of the present patent disclosure; and

FIG. 10 depicts a block diagram of an embodiment of a wireless device operable to customize the downloading of network list information from an RSM according to the teachings of the present patent disclosure.

### DETAILED DESCRIPTION OF THE DRAWINGS

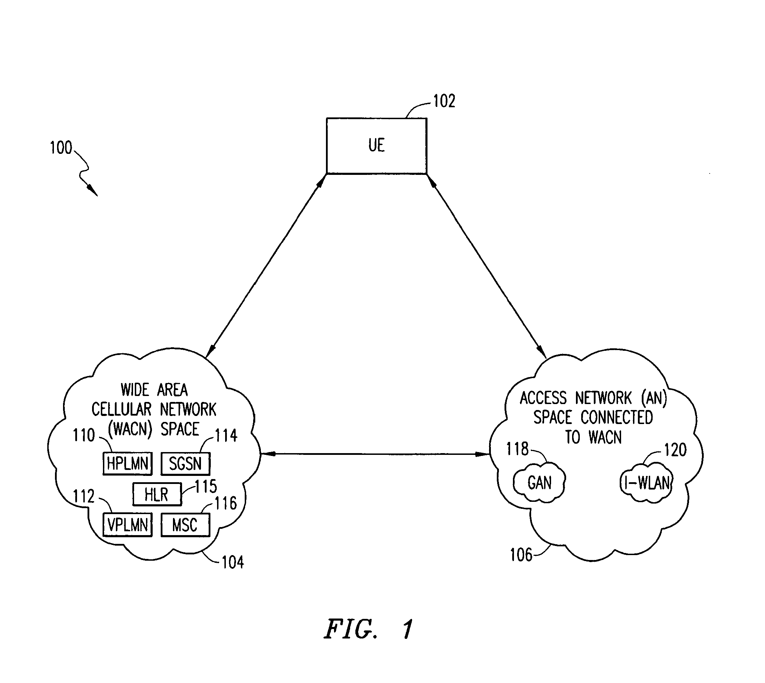

A system and method of the present patent disclosure will now be described with reference to various examples of how the embodiments can best be made and used. Like reference numerals are used throughout the description and several views of the drawings to indicate like or corresponding parts, wherein the various elements are not necessarily drawn to scale. Referring now to the drawings, and more particularly to FIG. 1, depicted therein is an exemplary generalized network environment 100 wherein an embodiment of the present patent disclosure may be practiced. A generalized wireless user equipment (UE) or mobile equipment (ME) device 102 may comprise any portable computer (e.g., laptops, palmtops, or handheld computing devices) or a mobile communications device (e.g., cellular phones or data-enabled handheld devices capable of receiving and sending messages, web browsing, et cetera), or any enhanced personal digital assistant (PDA) device or integrated information appliance capable of email, video mail, Internet access, corporate data access, messaging, calendaring and scheduling, information management, and the like, that is preferably operable in one or more modes of operation and in a number of frequency bands and/or radio access technologies (RATs). For example, UE/ME device 102 may operate in the cellular telephony band frequencies as well as Wireless Local Area Network (WLAN) bands. Further, other bands in which the UE device could operate wirelessly may comprise Wi-Max bands or one or more satellite bands. Accordingly, for purposes of the present patent disclosure, those skilled in the art should recognize that the term "UE device" or "wireless device" may comprise a mobile equipment (ME) device (with or without any removable storage module or RSM such as a Universal Subscriber Identity Module (USIM) card, Removable User Identity Module (RUIM) card, a Subscriber Identity Module (SIM) card, or a compact Flash card, etc.) as well as other portable wireless information appliances, also with or without such RSMs.

By way of illustration, the network environment 100 is envisioned as two broad categories of communication spaces capable of providing service to UE device 102 wherein acquisition of network advertisement information may be accomplished in accordance with the teachings set forth herein. In wide area cellular network (WACN) space 104, there may exist any number of Public Land Mobile Networks (PLMNs) that are operable to provide cellular telephony services which may or may not include packet-switched data services. Depending on the coverage area(s) and whether the user is roaming, WACN space 104 can include a number of home networks 110 (i.e., home PLMNs or HPLMNs, or equivalent HPLMNs or EHPLMNs), visited networks (i.e., VPLMNs) 112, each with appropriate infrastructure such as Home Location Register (HLR) nodes 115, Mobile Switching Center (MSC) nodes 116, and the like. Since the WACN space 104 may also include a General Packet Radio Service (GPRS) network that provides a packet radio access for mobile devices using the cellular infrastructure of a Global System for Mobile Communications (GSM)-based carrier network, a Serving GPRS Support Node (SGSN) 114 is exemplified therein. Additionally, by way of generalization, the PLMNs of the WACN space 104 may comprise radio access and core networks selected from the group comprising Enhanced Data Rates for GSM Evolution (EDGE) networks, Integrated Digital Enhanced Networks (IDENs), Code Division Multiple Access (CDMA) networks, Time Division Multiple Access (TDMA) networks, Universal Mobile Telecommunications System (UMTS) networks, or any 3^{rd} Generation Partnership Project (3GPP)-compliant network (e.g., 3GPP or 3GPP2), all operating with well known frequency bandwidths and protocols.

Further, UE device 102 is operable to obtain service from an access network (AN) space 106 that is connected to the WACN space 104. In one implementation, the AN space 106 includes one or more generic access networks (GANs) 118 as well as any type of wireless LAN (WLAN) arrangements 120, both of which may be generalized as any wireless AN that is operable to provide access services between UE device 102 and a PLMN core network using a broadband Internet Protocol (IP)-based network. WLAN arrangements 120 provide short-range wireless connectivity to UE device 102 via access points (APs) or "hot spots," and can be implemented using a variety of standards, e.g., IEEE 802.11b, IEEE 802.11a, IEEE 802.11g, HiperLan and HiperLan II standards, Wi-Max standard, OpenAir standard, and the Bluetooth standard.

In one embodiment, interfacing between the WACN and AN spaces may be effectuated in accordance with certain standards. For instance, GAN 118 may be interfaced with one or more PLMNs using the procedures set forth in the 3GPP TR 43.901, 3GPP TS 43.318 and 3GPP TS 44.318 documents as well as related documentation. Likewise, WLAN 120 may be interfaced with at least one PLMN core using the procedures set forth in the 3GPP TS 22.234, 3GPP TS 23.234 and 3GPP TS 24.234 documents as well as related documentation, and may therefore be referred to as an Interworking WLAN (I-WLAN) arrangement.

Based on the foregoing, it should be recognized that the service infrastructure of the network environment 100 may be generalized into three broad segments: one or more radio access networks (RANs) (which can include cellular band technologies as well as WLAN technologies), one or more core networks (CNs), and one or more service networks (SNs). Depending on network ownership arrangements and service-level agreements, each RAN may support one or more CNs, each of which in turn may support one or more SNs. Such combinations of infrastructure equipment across multiple owners are sometimes used to create Mobile Virtual Network Operators (MVNOs). In some embodiments, the teachings of the present patent disclosure are equally applicable to MVNOs as to PLMNs. Since each RAN, CN, or SN may be provided with its own network identifier (ID code), numerous RAN-CN-SN combinations may be available in the network environment 100. As will be seen below, various network lists (e.g., user- or operator-preferred networks, user- or operator-prohibited networks, lists of network capabilities, frequency channels, etc.) may be provided as part of an RSM (i.e., selected from USIM cards, RUIM cards, SIM cards, or compact Flash cards, etc.) operable with the UE device, which could be downloaded to the UE device in a customized manner for facilitating network selection in an exemplary network environment.

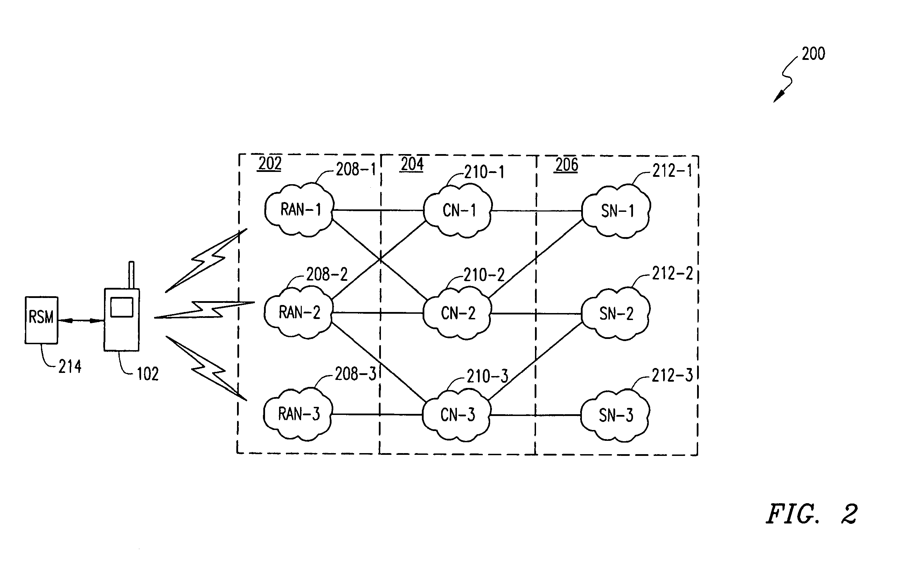

To formalize the teachings of the present disclosure, reference is now taken to FIG. 2 wherein an exemplary embodiment of a network environment 200 is shown that is a more concrete subset of the generalized network environment 100 illustrated in FIG. 1. As depicted, wireless UE device 102 is operably disposed for acquiring network advertisement information via scanning from a RAN segment 202 that is coupled to a CN segment 204 which in turn is coupled to an SN segment 206. Three RANs are illustrative: RAN-1 208-1, RAN-2 208-2 and RAN-3 208-3, which are identified with the network codes MANC1, MANC2 and MANC3, respectively. The CN segment 204 is also illustrated with three CNs: CN-1 210-1 (having an ID code of MCNC1), CN-2 210-2 (having an ID code of MCNC2) and CN-3 210-3 (having an ID code of MCNC3). Likewise, the SN segment 206 is illustrated with SN-1 212-1 (having an ID code of MSNC1), SN-2 212-2 (having an ID code of MSNC2) and SN-3 212-3 (having an ID code of MSNC3).

By way of example, RAN-1 208-1 is operable to support connectivity to two CNs, CN-1 210-1 and CN-2 210-2. In similar fashion, RAN-2 208-2 supports three CNs and RAN-3 208-3 supports only one CN. Each CN supports connectivity to one or more SNs: e.g., CN-3 210-3 connects to SN-2 212-2 as well as SN-3 212-3. Given the interconnectivity of the RAN/CN/SN segments, several combinations of identification codes may be obtained for purposes of uniquely identifying the various RAN-CN-SN combinations that the wireless UE device 102 can potentially discover and select from. For instance, with a suitable Mobile Country Code (MCC) being included, the three ID code combinations associated with RAN-1 208-1 are:
[MCC.MANC1.MCNC1.MSNC1];
[MCC.MANC1.MCNC1.MSNC2]; and
[MCC.MANC1.MCNC2.MSNC2].

Likewise, the ID code combinations associated with RAN-2 208-2 are:
[MCC.MANC2.MCNC1.MSNC1];
[MCC.MANC2.MCNC1.MSNC2];
[MCC.MANC2.MCNC2.MSNC2];
[MCC.MANC2.MCNC3.MSNC2]; and
[MCC.MANC2.MCNC3.MSNC3].

The two ID code combinations associated with RAN-3 208-3 are: [MCC.MANC3.MCNC3.MSNC2] and [MCC.MANC3.MCNC3.MSNC2]. As described in detail in the related U.S. patent application entitled "SYSTEM AND METHOD FOR PROVIDING NETWORK ADVERTISEMENT INFORMATION VIA A NETWORK ADVERTISEMENT BROKER (NAB)," filed April 28, 2005; Application No. 11/116,470, (Attorney Docket No. 1400-1036US) and referenced hereinabove, the UE device can discover applicable network ID code information either in an initial scan procedure (i.e., when the device is not registered on any networks) or in a background scan procedure (i.e. when the device is registered on a network).

Given the diversity of the exemplary network environment 100 described earlier with respect to FIG. 1, it is envisaged that scanning may be effectuated in a frequency band in which at least one of the following technologies is operating: GERAN (without EDGE), GERAN (with EDGE), an IDEN network, a CDMA/CDMA2000/TDMA network, a UMTS network, and so on. Additionally, where WLAN access capability is included, scanning may be effectuated in a frequency band compliant with a WLAN standard selected from: IEEE 802.11b standard, IEEE 802.11a standard, IEEE 802.11g standard, HiperLan standard, HiperLan II standard, Wi-Max standard, OpenAir standard, and Bluetooth standard.

An RSM card 214 is operable to be coupled to UE device 102, wherein a number of network lists may be provisioned by network operators, etc. When an RSM is present and the UE device is first turned on, the storage module(s) of the UE device may be updated with any information stored in the RSM. Thus, in one embodiment, the RSM could be programmed with the most current frequency information when it is supplied to a subscriber. The data in the RSM may, for example, add extra frequencies to the default list of frequencies, or raster of frequencies, stored in the device for searching or scanning. Alternatively or additionally, the data in the RSM may modify the frequency data already stored in the device so that those frequencies which are not to be used could be removed, or marked in a way that they are not to be scanned as part of a search strategy. As will be seen below, suitable database structures may be provisioned in the RSM or in the memory of a wireless device for storing applicable frequency data, network list data, among others. Furthermore, a list management application may be provisioned in the RSM that is operable to modify the stored data based on geographic region information provided thereto.

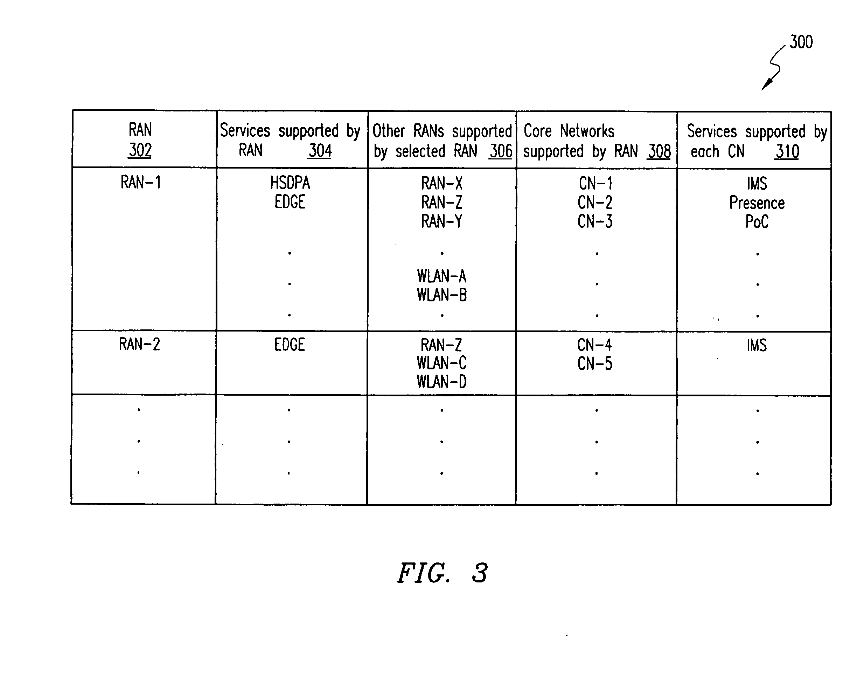

Referring now to FIGS. 3-6, depicted therein are various exemplary database structures provided as part of an RSM from which network list information may be selectively downloaded to a UE device in accordance with the teachings of the present patent disclosure. Reference numeral 300 in FIG. 3 refers to a RAN-based data structure wherein service capabilities, connectivity to other RANs and supported PLMN core networks, et cetera, are provided. It should be appreciated that based on the scope of coverage of the database as well as any third-party commercial arrangements, the database structure 300 may be populated with the data entries pertaining to a fairly large number of RANs. Reference numeral 302 refers to one or more RANs identified by their RAN ID codes. Services supported by each RAN are identified in column 304. For example, RAN-1 is operable to support High Speed Datalink Packet Access (HSDPA), EDGE, and the like. Cross-relationship or interoperability of a particular RAN with other access networks is indicated in column 306. As illustrated, RAN-1 interoperates with additional RANs, RAN-X, RAN-Y, and RAN-Z, as well as WLANs, WLAN-A and WLAN-C. Reference numeral 308 refers to the core networks supported by each particular RAN identified in column 302. Reference numeral 310 refers to the various services supported by each CN, such as, e.g., IP Multimedia Subsystem (IMS), Presence, Push-to-Talk over Cellular (PoC), and the like.

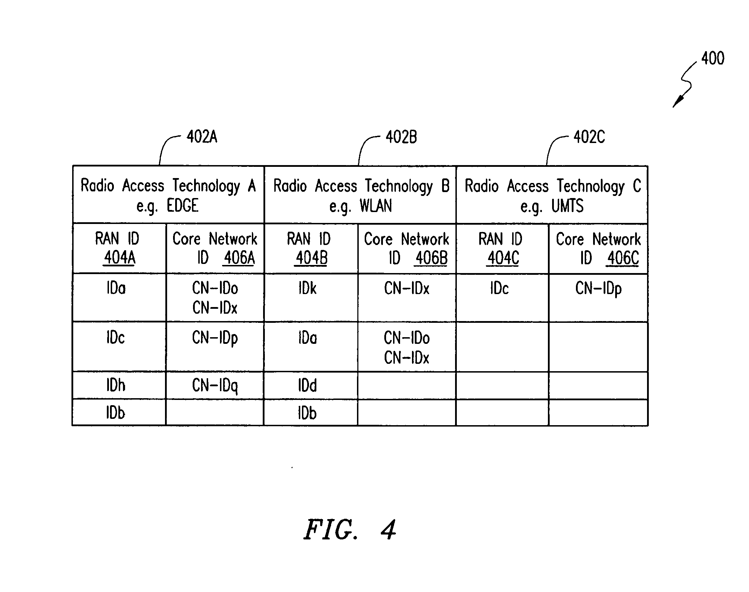

FIG. 4 depicts an exemplary database structure 400 that may be provided as an operated-based list, a user-based list or an enterprise-based list, or any combination thereof, that may be downloaded to a UE device for facilitating network selection preferences and prohibitions according to one aspect of the present patent disclosure. In one embodiment, the database structure 400 is configured as an operator-defined network list that specifies a plurality of network IDs which should be considered as preferred networks in one or more radio access technologies, wherein the network IDs are populated by the operator. In another embodiment, the database structure 400 may be configured as one or more user network lists, with one list per user using the wireless UE device, for example. Each such list may be accessed by the users upon identifying themselves to the device, wherein the contents of the list (i.e., network IDs) are populated by the respective users. In yet another embodiment, the database structure 400 may be configured as a list of network IDs that are preferred by an enterprise owning the wireless devices for the benefit of its employee-users.

Irrespective of the particular configuration, the database structure 400 defines a plurality of radio access technologies, e.g., EDGE technology 402A, WLAN technology 402B, and UMTS technology 402C, wherein a number of RAN IDs are provided for each technology. As illustrated in FIG. 4, column 404A identifies multiple RAN IDs for the EDGE technology, each RAN supporting one or more core networks identified in corresponding column 406A. Likewise, columns 404B/406B and columns 404C/406C are provided for the WLAN and UMTS technologies respectively. As one skilled in the art may appreciate, the various IDs can be Service Set IDs (SSIDs) (for WLAN), SIDs (for IS-95 and IS-136), or [MCC,MNC] combinations (for GSM, where MNC identifies a Mobile Network Code).

Similar to the network preference lists set forth above, an analogous database structure may be provided that identifies one or more networks that are forbidden for use. Such a list of prohibited networks may be configured as, for example, an operator-barred RAN list (i.e., specified by an operator), enterprise-barred RAN list (i.e., specified by an enterprise), operator-barred CN list (i.e., specified by an operator), and enterprise-barred CN list (i.e., specified by an enterprise).

In addition to one or more of the embodiments and configurations of the database structures identifying network preferences and prohibitions, one or more home network lists (including equivalent home networks or EHPLMNs) may be provided for facilitating network selection. As is well known, each of the wide area cellular PLMNs may be arranged as a number of cells, with each cell having sectors (e.g., typically three 120-degree sectors per base station (BS) or cell). Each individual cell is provided with a CGI parameter to identify them. A group of cells is commonly designated as a Location Area (LA) and may be identified by an LA Identifier (LAI). At the macro level, the PLMNs may be identified in accordance with the underlying cellular technology. For example, as alluded to before, GSM-based PLMNs may be identified by an identifier comprised of a combination of MCC and MNC. The CDMA/TDMA-based PLMNs may be identified by a System Identification (SID) parameter and/or a Network Identification (NID) parameter. Regardless of the cellular infrastructure, all cells broadcast the macro level PLMN identifiers such that a wireless device (e.g., UE device 102) wishing to obtain service can identify the wireless network.

Additionally, a subscriber is also given a unique identifier which can vary depending on the underlying cellular infrastructure and may be constructed at least in part from some of the parametrics that are used in constructing the network identifiers. In GSM, for example, the subscriber's IMSI parameter is constructed as [MCC][MNC][MIN], where [MCC] identifies the country that the subscriber is from, [MNC] identifies the PLMN network, and [MIN] is the unique ID that identifies the wireless UE device).

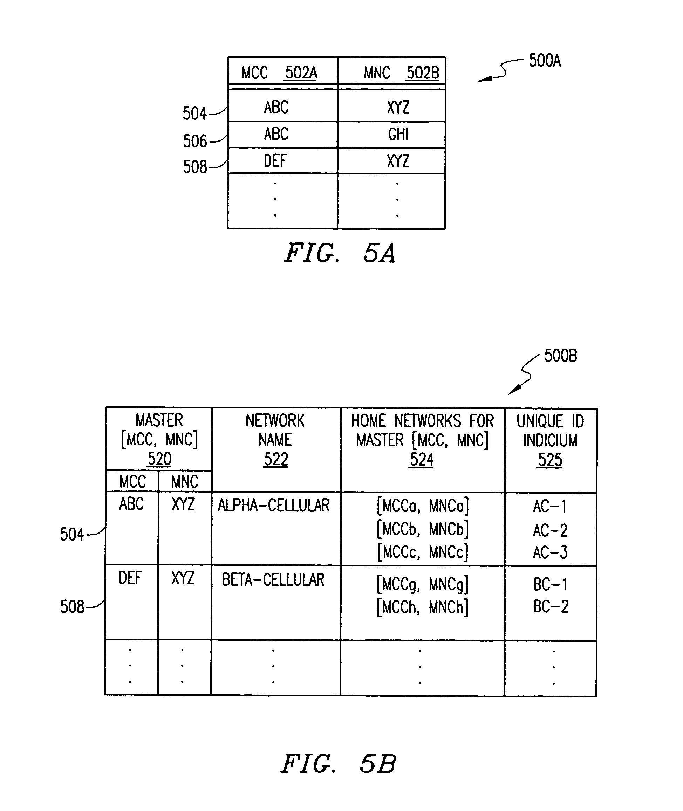

FIGS. 5A and 5B depict exemplary database structures which may be provisioned in an RSM for specifying various EHPLMNs in facilitating network selection according to one embodiment. Reference numeral 500A refers to a basic database structure that comprises a list of [MCC] 502A and [MNC] 502B combinations that may be identified as being the same networks. In the case of equivalent networks, the [MCC][MNC] combinations may identify a set of EHPLMNs for the IMSI associated with the subscriber. Reference numerals 504, 506 and 508 refer to three exemplary networks, wherein networks 504 and 506 share the same [MCC], i.e., [ABC], and networks 504 and 508 share the same [MNC] (i.e., [XYZ]).

Reference numeral 500B refers to an enhanced database structure where additional information may be provided for facilitating network selection. A Master [MCC][MNC] column 520 identifies the [MCC] and [MNC] combinations that match the IMSI's [MCC]/[MNC] part (i.e., Master Home PLMN). A network name column 522 identifies the master network by name. A home network (E/HPLMN) column 524 includes a list of home networks for each of the Master [MCC][MNC] pairs. In one implementation, the [MCC][MNC] combinations identifying the home networks may be provided in a priority order. For example, a positional priority may be implemented wherein an [MCC][MNC] combination at the top has a higher priority over the one below it, or an [MCC][MNC] combination to the left has a higher priority over the one to the right. An explicit priority ranking may also be provided wherein an indicator indicating the priority of the PLMN is appended to the database structure 500B. For instance, a value of [0] may indicate the highest priority. Where there is no priority indicator stored, all PLMNs have equal priority. An indicium column 525 is provided for uniquely identifying each PLMN listed in the home network list 524, wherein the indicium may comprise a unique identity name that can include some reference to the Master [MCC][MNC] pair or the network name associated therewith.

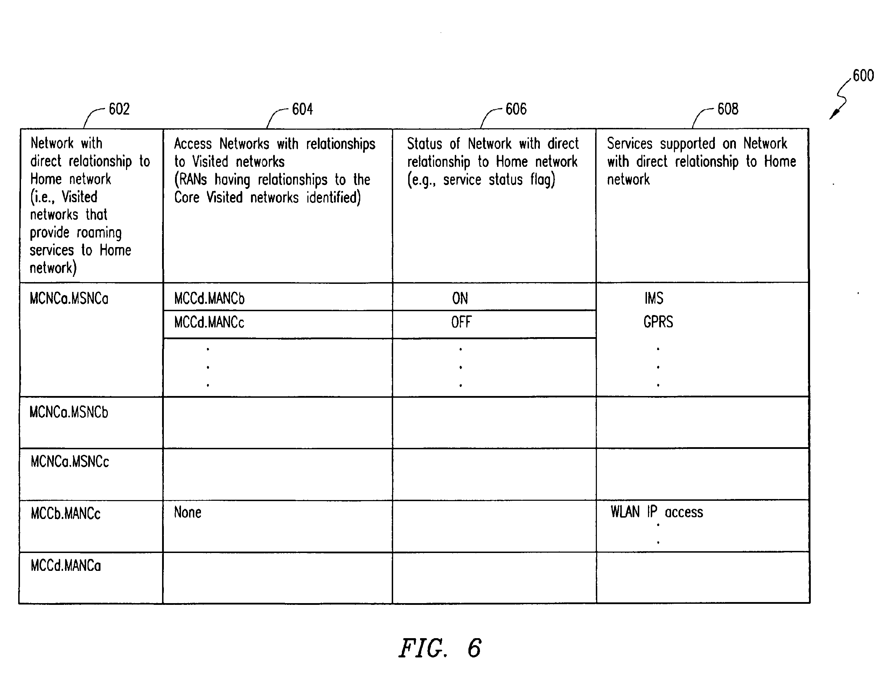

FIG. 6 depicts another exemplary database structure 600 that may be provisioned as part of an RSM, wherein reference numeral 602 refers to a column of networks that have direct visitor relationships to one or more home networks (including equivalent home networks) defined for a wireless UE device and/or subscriber. In other words, the networks identified in column 602 are visited networks that provide roaming services to the home networks. As illustrated, these visited networks may comprise just the access networks (e.g., access networks identified as [MCCb.MANCc] and [MCCd.MANCa]) as well as network combinations that can include CNs and SNs. Column 604 identifies access networks having with relationships with the visited core networks identified in column 602. Column 606 provides status information with respect to indicating whether the identified radio/core network combinations are known to be operational. For instance, a service status flag such as "ON" or "OFF" may be provided to indicate if a particular network combination (e.g., a RAN/CN combination) is in service or not. Additionally, column 608 of the RB database structure provides services and capabilities supported on the visited networks that are identified in column 602.

Those skilled in the art should recognize that the network lists described hereinabove, including network preferences and barred lists, frequency ranges, service capabilities, cross-relationships, and the like, are representative or could be combined in various ways to be representative, at least in part, of network lists specified in 3GPP TS 31.102 documentation. As set forth in the Background section of the present patent disclosure, downloading of such information into a wireless UE device needs to be harmonized, customized, as well as standardized, especially in view of the existing diversity of equipment, provisioning options, and ever-changing commercial landscape of the wireless communications industry.

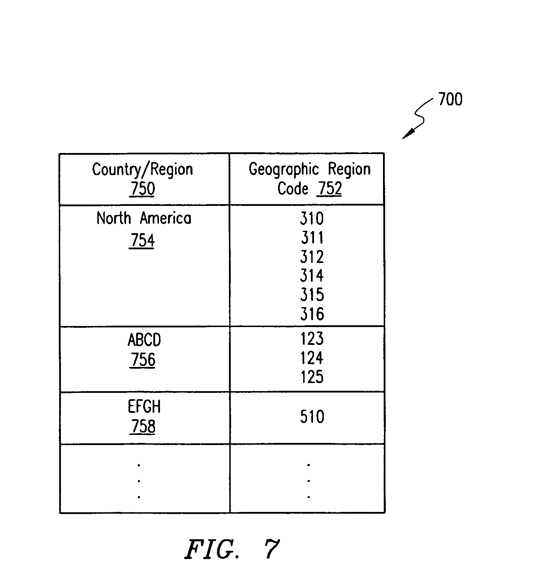

Accordingly, the present patent disclosure provides for customizable downloading of RSM's network list information based on discovery of at least one network by the UE device via scanning, either in initial scanning or in background scanning. In one embodiment, the network list information provisioned in the RSM may be indexed to or otherwise associated with suitable geographic region codes so that the list data can be filtered based on the geographic region information and/or network identity information that is discovered via scanning. FIG. 7 depicts an exemplary database structure 700 that may be utilized by a UE device for customizing the downloading of network list information from an RSM. Illustratively, data structure 700 includes a mapping relationship between various geographic entities 750 (i.e., individual countries and supra-national geographic regions such as North America, the European Union, et cetera) and geographic region codes 752 associated therewith. In a presently preferred exemplary arrangement, where a region/country has multiple country codes assigned to it, they are stored in such a way that all of them are associated with or otherwise mapped to the single geographic entity, which typically operates under a common mobile communications regulatory regime. It should be appreciated by one skilled in the art that this arrangement allows the wireless UE device to determine what country it is in when examining the country code of a PLMN it has discovered via scanning. By way of example, there are seven [MCC] values, 310 to 316, assigned to North America 754. Another exemplary entity, a single country ABCD 756, may also be provided with multiple [MCC] values, e.g., from 123 to 125. In another example, a geographic entity EFGH 758 is assigned only one [MCC], e.g., 510. As alluded to before, the data structure 700 may be provided as part of a storage module integrated with the wireless UE device.

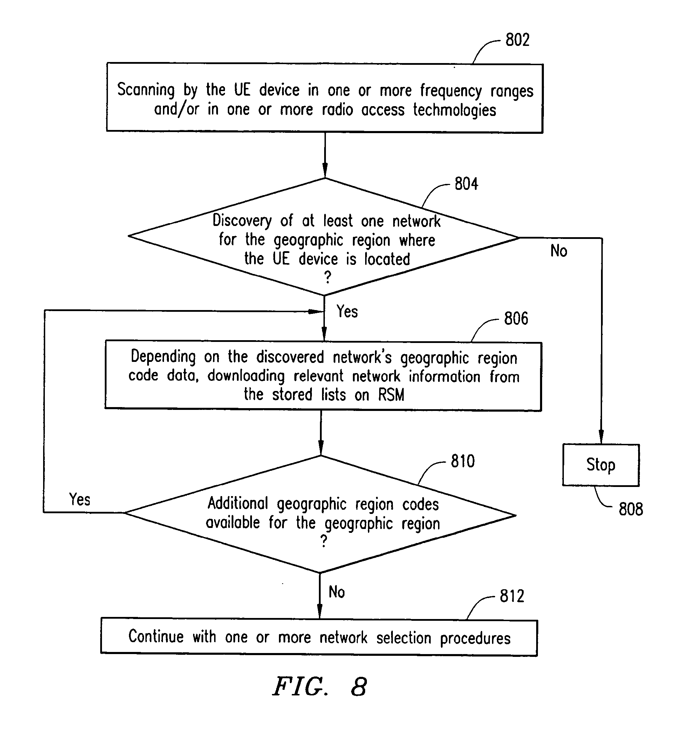

FIG. 8 is a flowchart associated with an embodiment of the present patent disclosure for managing or customizing the downloading of network list information from an RSM for use by a wireless UE device coupled thereto. Upon scanning by the UE device in one or more frequency ranges and/or in one or more radio access technologies (block 802), a determination is made if at least one network is discovered for the geographic region where the device is located (block 804). If no network is discovered, the process flow terminates (block 808). On the other hand, if a network is discovered, appropriate geographic region information is determined based on the discovered network's identity information (e.g., [MCC][MNC] combination). Depending on the discovered network's geographic region information, only those network list data entries that are relevant to the geographic region and/or the discovered network are downloaded from the RSM (block 806). As pointed out in the foregoing, there may be multiple geographic region codes for a region (such as North America), and the device logic may select to download network list information relating to any or all of additional geographic codes. Accordingly, a determination is made by suitable logic in the UE device whether additional geographic codes are available for the region in which the device is located (block 810). If so, downloading of the network list information from is accordingly modulated. Once the downloading is complete, the UE device may proceed with one or more network selection procedures. Furthermore, the information downloaded from the RSM may help further modulate the UE's behavior where interaction with network entities such as network advertisement brokers and/or roaming brokers is warranted. Details regarding such procedures may be found in the following commonly owned co-pending U.S. patent applications: (i) "NETWORK SELECTION SCHEME USING A ROAMING BROKER (RB)" filed April 28, 2005; Application No. 11/116,461; and (ii) "SYSTEM AND METHOD FOR PROVIDING NETWORK ADVERTISEMENT INFORMATION VIA A NETWORK ADVERTISEMENT BROKER (NAB)" filed April 28, 2005; Application No. 11/116,470.

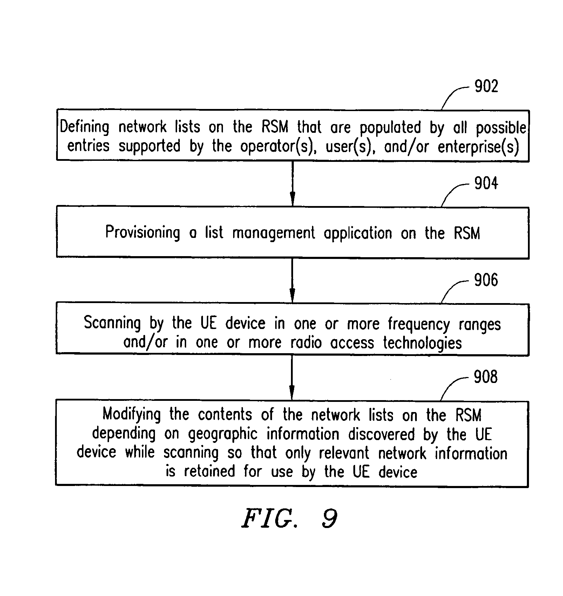

FIG. 9 is a flowchart associated with another embodiment of the present patent disclosure for managing or customizing the downloading of network list information from an RSM for use by a wireless UE device coupled thereto. In this option, new lists defined on the RSM contain all the entries an entity wants to populate, e.g., all the entries supported by the network operator(s), user(s), or enterprise(s) (block 902). A list management application is provisioned on the RSM (block 904) such that when a scan is performed by the UE device and a network is found and provided to the RSM (block 906), the list management application modifies the contents of the network lists depending on the geographic region information discovered by the UE device. Accordingly, only relevant network information is retained for use by the UE device depending where the device is located block 908).

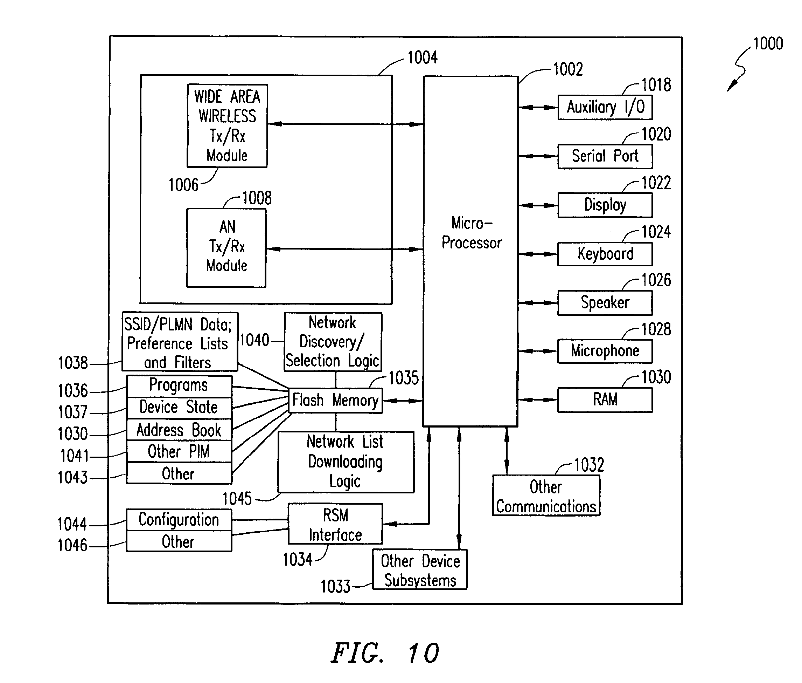

FIG. 10 depicts a block diagram of an embodiment of a wireless device or UE device operable to customize the downloading of network list information from an RSM according to the teachings of the present patent disclosure. It will be recognized by those skilled in the art upon reference hereto that although an embodiment of UE 102 may comprise an arrangement similar to one shown in FIG. 10, there can be a number of variations and modifications, in hardware, software or firmware, with respect to the various modules depicted. Accordingly, the arrangement of FIG. 10 should be taken as illustrative rather than limiting with respect to the embodiments of the present patent disclosure. A microprocessor 1002 providing for the overall control of UE 1000 is operably coupled to a communication subsystem 1004 which includes transmitter/receiver (transceiver) functionality for effectuating multi-mode scanning and communications over a plurality of bands. By way of example, a wide area wireless Tx/Rx module 1006 and a wireless AN Tx/Rx module 1008 are illustrated. Although not particularly shown, each Tx/Rx module may include other associated components such as one or more local oscillator (LO) modules, RF switches, RF bandpass filters, A/D and D/A converters, processing modules such as digital signal processors (DSPs), local memory, etc. As will be apparent to those skilled in the field of communications, the particular design of the communication subsystem 1004 may be dependent upon the communications networks with which the UE device is intended to operate. In one embodiment, the communication subsystem 1004 is operable with both voice and data communications.

Microprocessor 1002 also interfaces with further device subsystems such as auxiliary input/output (I/O) 1018, serial port 1020, display 1022, keyboard 1024, speaker 1026, microphone 1028, random access memory (RAM) 1030, a short-range communications subsystem 1032, and any other device subsystems generally labeled as reference numeral 1033. To control access, an RSM (SIM/RUIM/USIM) interface 1034 is also provided in communication with the microprocessor 1002. In one implementation, RSM interface 1034 is operable with an RSM card having a number of key configurations 1044 and other information 1046 such as identification and subscriber-related data as well as one or more SSID/PLMN lists and filters described in detail hereinabove.

Operating system software and other control software may be embodied in a persistent storage module (i.e., non-volatile storage) such as Flash memory 1035. In one implementation, Flash memory 1035 may be segregated into different areas, e.g., storage area for computer programs 1036 as well as data storage regions such as device state 1037, address book 1039, other personal information manager (PIM) data 1041, and other data storage areas generally labeled as reference numeral 1043. Additionally, appropriate network discovery/selection logic 1040 may be provided as part of the persistent storage for executing the various network scanning and selection procedures set forth in the preceding sections. Logic for managing and customizing the downloading of network list information from an RSM (not shown) is also exemplified as a logic module 1045. Associated therewith is a storage module 1038 for storing the SSID/PLMN lists, selection/scanning filters, capability indicators, et cetera, also described in detail hereinabove.

In view of the teachings set forth herein, the various logic blocks of UE device 1000 should be understood as comprising at least the following: a logic structure operable to effectuate discovery of at least one network via scanning; a logic structure for determining geographic region information based on the discovered network's identity information; and a logic structure for filtering only those network list data entries relevant to the geographic region information from the RSM, wherein the network list data entries are operable to facilitate network selection by the wireless UE device.

It is believed that the operation and construction of the embodiments of the present patent application will be apparent from the Detailed Description set forth above. While the exemplary embodiments shown and described may have been characterized as being preferred, it should be readily understood that various changes and modifications could be made therein without departing from the scope of the present disclosure as set forth in the following claims.

## Claims

1. A method for managing network lists in a wireless device (102), comprising:
determining (804, 806) geographic region information based on identity information of at least one network discovered (804) by said wireless device (102) via scanning (802); and **characterised by**
downloading (806) those network list data entries relevant to said determined geographic region information from a removable storage module ,RSM, (214) operable to be coupled to said wireless device (102), said network list data entries for facilitating network selection by said wireless device (102).

2. The method for managing network lists in a wireless device (102) as recited in claim 1, wherein said scanning (802) is performed via one of an initial scan procedure and a background scan procedure.

3. The method for managing network lists in a wireless device (102) as recited in claim 1 or claim 2, wherein said network list data entries downloaded from said RSM (214) comprise at least one network selected from one or more operator-preferred radio access networks (RANs), one or more operator-preferred core networks (CNs), one or more user-preferred radio access networks (RANs), one or more user preferred core networks (CNs), one or more operator-barred radio access networks (RANs), one or more operator-barred core networks (CNs), one or more user-barred radio access networks (RANs), and one or more user-barred core networks (CNs).

4. The method for managing network lists in a wireless device (102) as recited in claim 1 or claim 2, wherein said network list data entries downloaded from said RSM (214) comprise PLMN network ID data relating to at least one of user-preferred networks, user-barred networks, operator-preferred networks, and operator-barred networks.

5. The method for managing network lists in a wireless device (102) as recited in claim 1, claim 2, claim 3 or claim 4, further comprising:
determining (810) if additional geographic region codes are discovered; and
if so, downloading (806) network lists respectively corresponding to said additional geographic region codes from said RSM (214) for use by said wireless device (102).

6. A system, for managing network lists in a wireless device (102), comprising:
means for determining (804, 806) geographic region information based on identity information of at least one network discovered (804) by said wireless device (102); and **characterised by**
means for downloading (806) those network list data entries relevant to said determined geographic region information from a removable storage module (RSM) (214) operable to be coupled to said wireless device (102), said network list data entries for facilitating network selection by said wireless device (102).

7. The system for managing network lists in a wireless device (102) as recited in claim 6, wherein said scanning (802) is performed via one of an initial scan procedure and a background scanning procedure.

8. The system for managing network lists in a wireless device (102) as recited in claim .6 or claim 7, wherein said network list data entries downloaded from said RSM (214) comprise at least one network selected from one or more operator-preferred radio access networks (RANs), one or more operator-preferred core networks (CNs), one or more user-preferred radio access networks (RANs), one or more user-preferred core networks (CNs), one or more operator-barred radio access networks (RANs), one or more operator-barred core networks (CNs), one or more user-barred radio access networks (RANs), and one or more user-barred core networks (CNs).

9. The system for managing network lists in a wireless device (102) as recited in claim 6 or claim 8, wherein said network list data entries downloaded from said RSM (214) comprise PLMN network ID data relating to at least one of user-preferred networks, user-barred networks, operator-preferred networks, and operator-barred networks.

10. The system for managing network lists in a wireless device (102) as recited in claim 6, claim 7, claim 8 or claim 9, further comprising:
means for determining (810) if additional geographic region codes are discovered; and
means, operable responsive to determining that additional geographic region codes are discovered, for downloading (806) network lists respectively corresponding to said additional geographic region codes from said RSM for use by said wireless device (102).

11. A wireless device (1000) operable to customize downloading of network list information from a removable storage module (RSM) (214), comprising:
a logic structure (1040) for determining geographic region information based on identity information of at least one network discovered by said wireless device (1000); and **characterised by**
a logic structure (1038, 1045) for downloading only those network list data entries relevant to said determined geographic region information from said RSM (214), said network list data entries for facilitating network selection by said wireless device (1000).

## Patentansprüche

1. Verfahren zum Verwalten von Netzwerklisten in einer drahtlosen Vorrichtung (102), das aufweist:
Bestimmen (804, 806) einer geographischen Region-Information basierend auf einer Identitätsinformation von zumindest einem Netzwerk, das durch die drahtlose Vorrichtung (102) über ein Absuchen (802) entdeckt wird (804); und
**gekennzeichnet durch**
Herunterladen (806) derjenigen Netzwerklistedateneinträge, die für die bestimmte geographische Region-Information relevant sind, von einem entfernbaren Speichermodul RSM (removable storage module) (214), das betriebsfähig ist, mit der drahtlosen Vorrichtung (102) verbunden zu werden, wobei die Netzwerklistedateneinträge zur Erleichterung einer Netzwerkauswahl **durch** die drahtlose Vorrichtung (102) vorgesehen sind.

2. Verfahren zum Verwalten von Netzwerklisten in einer drahtlosen Vorrichtung (102) gemäß Anspruch 1, wobei das Absuchen (802) durch eines aus einem anfänglichen Absuchen-Verfahren und einem Absuchen-Verfahren im Hintergrund durchgeführt wird.

3. Verfahren zum Verwalten von Netzwerklisten in einer drahtlosen Vorrichtung (102) gemäß Anspruch 1 oder Anspruch 2, wobei die Netzwerklistedateneinträge, die von den RSM (214) heruntergeladen werden, zumindest ein Netzwerk aufweisen, das ausgewählt ist aus einem oder mehreren Betreiber-bevorzugten Funkzugriffsnetzwerken (RANs - radio access networks), einem oder mehreren Betreiber-bevorzugten Kernnetzwerken (CNs - core networks), einem oder mehreren Benutzer-bevorzugten Funkzugriffsnetzwerken (RANs), einem oder mehreren Benutzer-bevorzugten Kernnetzwerken (CNs), einem oder mehreren Betreiber-gesperrten Funkzugriffsnetzwerken (RANs), einem oder mehreren Betreiber-gesperrten Kernnetzwerken (CNs), einem oder mehreren Benutzer-gesperrten Funkzugriffsnetzwerken (RANs) und einem oder mehreren Benutzer-gesperrten Kernnetzwerken (CNs).

4. Verfahren zum Verwalten von Netzwerklisten in einer drahtlosen Vorrichtung (102) gemäß Anspruch 1 oder Anspruch 2, wobei die Netzwerklistedateneinträge, die von dem RSM (214) heruntergeladen werden, PLMN-Netzwerk-ID-Daten aufweisen, die zumindest eines betreffen aus Benutzer-bevorzugten Netzwerken, Benutzer-gesperrten Netzwerken, Betreiber-bevorzugten Netzwerken und Betreiber-gesperrten Netzwerken.

5. Verfahren zum Verwalten von Netzwerklisten in einer drahtlosen Vorrichtung (102) gemäß Anspruch 1, Anspruch 2, Anspruch 3 oder Anspruch 4, das weiter aufweist:
Bestimmen (810), ob zusätzliche geographische Region-Codes entdeckt werden; und
wenn ja, Herunterladen (806) von Netzwerklisten, die jeweils den zusätzlichen geographischen Region-Codes entsprechen, von dem RSM (214) zur Verwendung durch die drahtlose Vorrichtung (102).

6. System zum Verwalten von Netzwerklisten in einer drahtlosen Vorrichtung (102), das aufweist:
Mittel zum Bestimmen (804, 806) einer geographischen Region-Information basierend auf einer Identitätsinformation von zumindest einem Netzwerk, das durch die drahtlose Vorrichtung (102) entdeckt wird (804); und
**gekennzeichnet durch**
Mittel zum Herunterladen (806) derjenigen Netzwerklistedateneinträge, die für die bestimmte geographische Region-Information relevant sind, von einem entfernbaren Speichermodul RSM (removable storage module) (214), das betriebsfähig ist, mit der drahtlosen Vorrichtung (102) verbunden zu werden, wobei die Netzwerklistedateneinträge zur Erleichterung einer Netzwerkauswahl **durch** die drahtlose Vorrichtung (102) vorgesehen sind.

7. System zum Verwalten von Netzwerklisten in einer drahtlosen Vorrichtung (102) gemäß Anspruch 6, wobei das Absuchen (802) durch eines aus einem anfänglichen Absuchen-Verfahren und einem Absuchen-Verfahren im Hintergrund durchgeführt wird.

8. System zum Verwalten von Netzwerklisten in einer drahtlosen Vorrichtung (102) gemäß Anspruch 6 oder Anspruch 7, wobei die Netzwerklistedateneinträge, die von den RSM (214) heruntergeladen werden, zumindest ein Netzwerk aufweisen, das ausgewählt ist aus einem oder mehreren Betreiber-bevorzugten Funkzugriffsnetzwerken (RANs - radio access networks), einem oder mehreren Betreiber-bevorzugten Kernnetzwerken (CNs - core networks), einem oder mehreren Benutzer-bevorzugten Funkzugriffsnetzwerken (RANs), einem oder mehreren Benutzer-bevorzugten Kernnetzwerken (CNs), einem oder mehreren Betreiber-gesperrten Funkzugriffsnetzwerken (RANs), einem oder mehreren Betreiber-gesperrten Kernnetzwerken (CNs), einem oder mehreren Benutzer-gesperrten Funkzugriffsnetzwerken (RANs) und einem oder mehreren Benutzer-gesperrten Kernnetzwerken (CNs).

9. System zum Verwalten von Netzwerklisten in einer drahtlosen Vorrichtung (102) gemäß Anspruch 6 oder Anspruch 8, wobei die Netzwerklistedateneinträge, die von dem RSM (214) heruntergeladen werden, PLMN-Netzwerk-ID-Daten aufweisen, die zumindest eines betreffen aus Benutzer-bevorzugten Netzwerken, Benutzer-gesperrten Netzwerken, Betreiber-bevorzugten Netzwerken und Betreiber-gesperrten Netzwerken.

10. System zum Verwalten von Netzwerklisten in einer drahtlosen Vorrichtung (102) gemäß Anspruch 6, Anspruch 7, Anspruch 8 oder Anspruch 9, das weiter aufweist:
Mittel zum Bestimmen (810), ob zusätzliche geographische Region-Codes entdeckt werden; und
Mittel, die betriebsfähig sind abhängig von dem Bestimmen, dass zusätzliche geographische Region-Codes entdeckt werden, zum Herunterladen (806) von Netzwerklisten, die jeweils den zusätzlichen geographischen Region-Codes entsprechen, von dem RSM (214) zur Verwendung durch die drahtlose Vorrichtung (102).

11. Drahtlose Vorrichtung (1000), die betriebsfähig ist, das Herunterladen einer Netzwerkliste-Information von einem entfernbaren Speichermodul (RSM) (214) anzupassen, die aufweist:
eine Logikstruktur (1040) zum Bestimmen einer geographischen Region-Information basierend auf einer Identitätsinformation von zumindest einem Netzwerk, das durch die drahtlose Vorrichtung (1000) entdeckt wird; und
**gekennzeichnet durch**
eine Logikstruktur (1038, 1045) zum Herunterladen nur derjenigen Netzwerklistedateneinträge, die für die bestimmte geographische Region-Information relevant sind, von dem RSM (214), wobei die Netzwerklistedateneinträge zur Erleichterung einer Netzwerkauswahl **durch** die drahtlose Vorrichtung (1000) vorgesehen sind.

## Revendications

1. Procédé de gestion de listes de réseaux dans un dispositif sans fil (102), comprenant l'étape consistant à :
déterminer (804, 806) des informations de régions géographiques sur la base d'informations d'identité d'au moins un réseau découvert (804) par balayage (802) par ledit dispositif sans fil (102) ; et
**caractérisé par** l'étape consistant à :
télécharger (806) les rubriques de données de la liste de réseaux qui intéressent lesdites informations de régions géographiques déterminées à partir d'un module de mémoire amovible RSM (214), (pour "Removable Storage Module") en mesure d'être couplé audit dispositif sans fil (102), lesdites rubriques de données de la liste de réseaux étant destinées à faciliter la sélection du réseau par ledit dispositif sans fil (102).

2. Procédé de gestion de listes de réseaux dans un dispositif sans fil (102) selon la revendication 1, dans lequel ledit balayage (802) est effectué à l'aide d'une procédure parmi une procédure de balayage initiale et une procédure de balayage en arrière-plan.

3. Procédé de gestion de listes de réseaux dans un dispositif sans fil (102) selon la revendication 1 ou la revendication 2, dans lequel lesdites rubriques de données de la liste de réseaux téléchargées à partir dudit module RSM (214) comprennent au moins un réseau sélectionné parmi un ou plusieurs réseaux d'accès radio (RAN pour "Radio Access Network") préférés par l'opérateur, un ou plusieurs noyaux d'interconnexion (CN pour "Core Network") préférés par l'opérateur, un ou plusieurs réseaux d'accès radio préférés par l'utilisateur, un ou plusieurs réseaux d'interconnexion préférés par l'utilisateur, un ou plusieurs réseaux d'accès radio interdits par l'opérateur, un ou plusieurs réseaux d'interconnexion interdits par l'opérateur, un ou plusieurs réseaux d'accès radio interdits par l'utilisateur et un ou plusieurs réseaux d'interconnexion interdits par l'utilisateur.

4. Procédé de gestion de listes de réseaux dans un dispositif sans fil (102) selon la revendication 1 ou la revendication 2, dans lequel lesdites rubriques de données de la liste de réseaux téléchargées à partir dudit module RSM (214) comprennent des données d'identification de réseaux RMPT intéressant au moins un réseau parmi des réseaux préférés par l'utilisateur, des réseaux interdits par l'utilisateur, des réseaux préférés par l'opérateur et des réseaux interdits par l'opérateur.

5. Procédé de gestion de listes de réseaux dans un dispositif sans fil (102) selon la revendication 1, la revendication 2, la revendication 3 ou la revendication 4, comprenant en outre les étapes consistant à :
déterminer (810) si des codes de régions géographiques additionnels ont été découverts ; et
si tel est le cas, télécharger (806) des listes de réseaux correspondant respectivement auxdits codes de régions géographiques additionnels à partir dudit module RSM (214) pour être utilisées par ledit dispositif sans fil (102).

6. Système destiné à gérer des listes de réseaux dans un dispositif sans fil (102), comprenant :
un moyen destiné à déterminer (804, 806) des informations de régions géographiques sur la base d'informations d'identité d'au moins un réseau découvert (804) par ledit dispositif sans fil (102) ;
**caractérisé par** :
un moyen destiné à télécharger (806) les rubriques de données de la liste de réseaux qui intéressent lesdites informations de régions géographiques ainsi déterminées à partir d'un module RSM (214) en mesure d'être couplé audit dispositif sans fil (102), lesdites rubriques de données de la liste de réseaux étant destinées à faciliter la sélection du réseau par ledit dispositif sans fil (102).

7. Système destiné à gérer des listes de réseaux dans un dispositif sans fil (102) selon la revendication 6, dans lequel ledit balayage (802) est effectué à l'aide d'une procédure parmi une procédure de balayage initiale et une procédure de balayage en arrière-plan.

8. Système destiné à gérer des listes de réseaux dans un dispositif sans fil (102) selon la revendication 6 ou la revendication 7, dans lequel lesdites rubriques de données de la liste de réseaux téléchargées à partir dudit module RSM (214) comprennent au moins un réseau sélectionné parmi un ou plusieurs réseaux d'accès radio préférés par l'opérateur, un ou plusieurs noyaux d'interconnexion préférés par l'opérateur, un ou plusieurs réseaux d'accès radio préférés par l'utilisateur, un ou plusieurs réseaux d'interconnexion préférés par l'utilisateur, un ou plusieurs réseaux d'accès radio interdits par l'opérateur, un ou plusieurs réseaux d'interconnexion interdits par l'opérateur, un ou plusieurs réseaux d'accès radio interdits par l'utilisateur et un ou plusieurs réseaux d'interconnexion interdits par l'utilisateur.

9. Système destiné à gérer des listes de réseaux dans un dispositif sans fil (102) selon la revendication 6 ou la revendication 8, dans lequel lesdites rubriques de données de la liste de réseaux téléchargées à partir dudit module RSM (214) comprennent des données d'identification de réseaux RMPT intéressant au moins un réseau parmi des réseaux préférés par l'utilisateur, des réseaux interdits par l'utilisateur, des réseaux préférés par l'opérateur et des réseaux interdits par l'opérateur.

10. Système destiné à gérer des listes de réseaux dans un dispositif sans fil (102) selon la revendication 6, la revendication 7, la revendication 8 ou la revendication 9, comprenant en outre :
un moyen destiné à déterminer (810) si des codes de régions géographiques additionnels ont été découverts ; et
en réponse à la détermination que des codes de régions géographiques additionnels ont été découverts, un moyen destiné à télécharger (806) des listes de réseaux correspondant respectivement auxdits codes de régions géographiques additionnels à partir dudit module RSM (214) pour être utilisées par ledit dispositif sans fil (102).

11. Dispositif sans fil (1000) en mesure de personnaliser le téléchargement d'informations de listes de réseaux à partir d'un module RSM (214), comprenant :
une structure logique (1040) destinée à déterminer des informations de régions géographiques sur la base d'informations d'identité d'au moins un réseau découvert par ledit dispositif sans fil (1000) ; et
**caractérisé par** :
une structure logique (1038, 1045) destinée à ne télécharger que les rubriques de données de la liste des réseaux qui intéressent lesdites informations de régions géographiques déterminées, à partir dudit module RSM (214), lesdites rubriques de données de la liste des réseaux étant destinées à faciliter la sélection d'un réseau par ledit dispositif sans fil (1000).
